Europäisches Patentamt

European Patent Office

Office européen des brevets

(11) Publication number: **0 073 587**
A1

# EUROPEAN PATENT APPLICATION

(21) Application number: 82304245.2

(22) Date of filing: 11.08.82

(51) Int. Cl.³: **H 01 R 39/04,** H 01 R 39/06

(30) Priority: 17.08.81 GB 8125083

(43) Date of publication of application: 09.03.83
Bulletin 83/10

(84) Designated Contracting States: DE FR GB IT

(71) Applicant: **NATIONAL RESEARCH DEVELOPMENT CORPORATION, 101 Newington Causeway, London SE1 6BU (GB)**

(72) Inventor: **Evans, Ronald Michael, Southfields Reigate Road, Dorking Surrey RH4 1SW (GB)**

(74) Representative: **Chandler, Derek Richard, Patent Department National Research Development Corporation 101 Newington Causeway, London SE1 6BU (GB)**

(54) **Commutators.**

(57) A brush commutator arrangement for an electrical machine, such as a micromotor or fractional horsepower machine. The arrangement has a commutator shaped to give at least one point-of-leave which is different for different segments. The brushes may have more than one spaced apart bundle of carbon fibres to produce an increased resistance in the commutation path to a segment being left to reduce sparking, without increasing resistance in the supply path to the next segments, permitting rapid growth of current. There may be lands between commutator segments. The trailing bundle of brush fibres may be unconnected to the supply, which is supplied to the leading bundle.

COMMUTATORS

This invention relates to commutators for electrical machines and more particularly to commutators for use with flexible brushes.

Commutators and their associated brushes provide sliding contacts used in electric machines to conduct electricity between a movable part, such as a rotor, and a fixed terminal of an electrical supply or other part of the machine and to switch the supply between and reverse the current within different circuits, such as winding sections, on the movable part. Hard brushes, made of blocks of carbon or other electrically conductive materials, have been used for many years as the best compromise on performance reliability and cost. Flexible brushes, of bundles of strands of conductive fibres, have also been used.

The form of commutator used in a machine depends in part on the type of brush used.

Commutators for use with flexible, e.g. carbon fibre, brushes may be designed in a different manner from those for use with solid, e.g. carbon block, brushes to permit progressive commutation and improved control of contact resistance and sparking. For example, UKPS 1478883 describes forms of drum and disc commutators having specific commutator segment shapes to achieve such improved control with fibre brushes, that is a shape to produce an initial stepwise increase in contact area followed by an increase in area at a declining mean rate. Such a shape is satisfactory in improving commutation conditions but, in common with other commutator designs, the brush always has its last contact with a commutator segment (the point-of-leave) through the same part of the brush. Wear of the brush can therefore be greater at the consistent point-of-leave than elsewhere over the brush end.

Small high speed motors in particular, sometimes called micro-motors, are at present equipped with conventional hard brushes urged against the commutator by metal springs. Such brushes exhibit a high sparking rate during commutation which tends to reduce their working life and impairs commutation efficiency. Also a high level of radiation occurs and for a large number of uses of the motors expensive suppression equipment must be added to enable the motors to meet statutory limits.

It is an object of the invention to provide an improved electrical machine brush commutator arrangement.

According to the invention there is provided an electrical machine brush commutator arrangement including a commutator having a plurality of segments together with associated brushes, the commutator segments being extended to have individual points-of-leave in different positions and the brushes being arranged to cooperate with the commutator to control the point-of-leave between a brush and commutator segments to not be restricted to one point on the brush during the operating life of the machine.

A commutator as just described may have one or more segments with a transverse edge formed to define a point-of-leave in the width of a brush traversing the segment in operation, the edge form being such that in traversing the commutator a point-of-leave occurs at more than one position in the width of a said traversing brush. The brushes may be of conductive fibre and flexible.

According to one aspect of the invention said edge is extended locally along the direction of movement of the commutator to define a point-of-leave.

One commutator segment may define several points-of-leave on a brush. Several commutator segments may each define at least one point-of-leave which differs in its position on a brush from segment to segment.

For convenience when several points-of-leave are defined by a segment edge each segment of the commutator may have a similar plurality of edge extensions whereby each segment has the same shape.

The commutator arrangement may be included in a micro-motor, although clearly applicable to other machines. Micro-motors are small motors, usually rated at a few watts or tens of watts and often operated at more than 10,000 rpm, used in hairdriers and similar equipment needing a compact, light, drive device.

The commutator and brushes may be formed so that in operation wear in the brushes maintains or improves commutation. In particular major commutation time, as mentioned below, may be increased.

Conveniently the commutator is a disc commutator of an insulating substrate carrying segments formed by deposited conductive material. Such a commutator may be constructed by "printed circuit" techniques.

According to another aspect of the invention there is provided an electrical machine commutator arrangement including a commutator having a plurality of spaced-apart segments and, between spaced-apart segments, regions of electrically isolated material wider than a brush.

According to yet another aspect of the invention there is provided an electrical machine commutator arrangement including a commutator having a plurality of segments together with associated narrow brushes, the commutator segments having adjacent edges curved to different degrees to provide a tapering space between the curved segment edges.

The tapering space may include an electrically isolated land to provide a surface in the tapering space substantially level with an adjacent segment surface. When the commutator is of printed circuit construction the land may be an isolated region of printed circuit conductor material.

The tapering space may be in part wider than a brush to cause a brush, in operation, to be in contact only with a part of one segment, that which is being left behind, before making any contact with the next segment.

The disc commutator segments may have borders shaped to produce a straight cut, angled cut or curved cut commutator. The segments may be displaced bodily with respect to each other. The segments may be a portion only of the disc surface in an annulus at or near to the inside or outside edge of the disc. Connection areas for the windings may be joined to the segments by narrow tracks of deposited conductive material.

According to a further aspect of the invention there is provided an electrical machine including a commutator arrangement of narrow brushes and a commutator having a plurality of segments, together with a rotor having a multipole core wound with tapped pole windings, the commutator having segments connected to the rotor windings and to said tappings, the said segments being of different size.

A narrow brush is one having an aspect ratio of between 5:1 and 25:1 and preferably between 10:1 and 20:1 for the whole of the brush, i.e. all bundles if made in several layers or bundles.

Advantageously the segment connected to a winding tapping for one rotor pole may be smaller than the segments connected to the start and finish of the winding. For a centre-tapped winding, commutation is improved when the smaller segment is no more than three quarters of the size of the larger segment, i.e. that for the leading part of the winding. The brushes may be hard or flexible.

The fibres in a brush may be clamped at or close to an end in a clamp of conductive material providing an electrical connection to the brush.

The fibres in a brush may be clamped at a point other than at or close to an end in a clamp of conductive or non-conductive material, with one end of the brush extending to form in operation a contact with a commutator and the other end of the brush extending to provide in operation an electrical connection to the brush by pressure contact with a conductive body. The fibres at the said other end may be bent over in providing the pressure contact.

According to another aspect of the invention the conductive flexible fibre brushes may have spaced apart bundles of fibres.

The bundles may be different lengths.

The bundles may be spaced apart in any convenient manner over the body of the brush.

The spacing of the bundles is advantageously arranged to avoid entrapping material during operation of the brush on a commutator.

The fibre brushes may be arranged to provide an inherent spring action, avoiding the need for brush guides and separate springs.

According to a particular aspect of the invention, there is provided an electrical machine commutator arrangement having a plurality of segments together with associated brushes in which the brushes are conductive flexible fibre brushes having spaced apart bundles of fibres, the bundles being spaced apart in the direction of relative motion, in operation, of the brush and commutator and having an electrical supply connection to the leading bundle at least but no such connection to the trailing bundle of fibres.

The arrangement and spacing of the brush bundles and the segments may be such that, in operation, the leading bundle is wholly in contact with one segment before the trailing, unconnected bundle loses contact with the previous segment whereby a conductive path between these segments through the trailing brush bundle is provided for lateral current flow, through which path commutation from the previous segment occurs.

The commutator may have isolated lands of conductive material between segments and the arrangement and spacing of the brush bundles and the segments may be such that, in operation, the leading bundle wholly leaves one segment and an adjoining land before the trailing, unconnected bundle makes contact with the next segment whereby a land provides a conductive path between segments also including the leading and trailing brush bundles in series and commutation takes place through a higher resistance than current supply through the leading brush bundle.

The leading bundle may wholly leave one segment before the trailing unconnected bundle loses contact with the one segment whereby the land provides part of a conductive path also including the leading and trailing brushes in series, through which commutation occurs.

Embodiments of the invention will now be described with reference to the accompanying drawings in which:-

Figure 1 shows a sectional elevation of a micro-motor;

Figure 2 shows a known conventional commutator and fibre brush arrangement in schematic form

with the following showing aspects of the invention in which:-

Figure 3 shows in schematic form a commutator and fibre brush arrangement;

Figure 4 shows how the brush of Figure 3 wears during operation;

Figure 5 shows schematically a commutator for a five pole rotor with centre tapped windings;

Figure 6 shows a specific example including the features of the commutators schematically shown in Figures 3 and 5;

Figures 7 and 8 show further commutator and fibre brush arrangements in schematic form;

Figures 9, 10 and 11 show fibre brush arrangements;

Figures 12 and 13 show connection arrangements for fibre brushes.

Figure 14 shows a commutator arrangement for an electrical machine according to the invention; and

Figures 15, 16 and 17 show further commutator and brush arrangements.

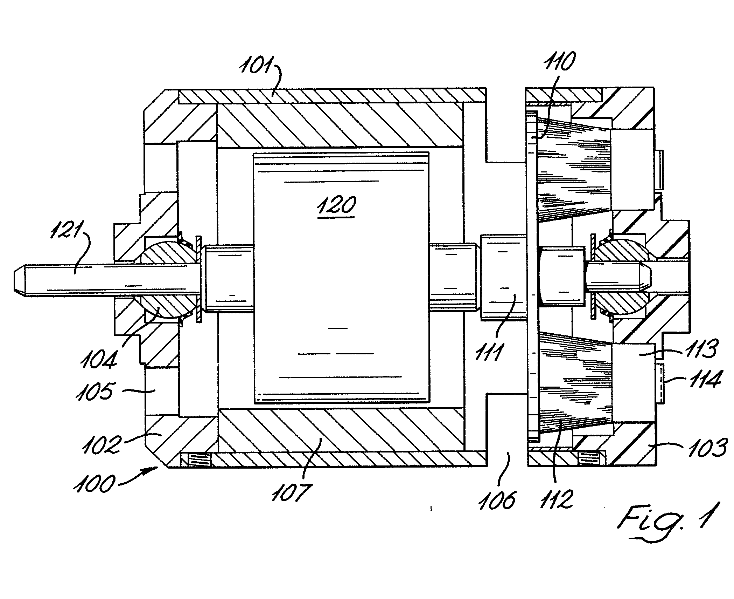

Figure 1 shows a sectional elevation of a micro-motor 100, of the disc commutator type.

The micro-motor has a frame including a cylindrical steel shell 101, a drive end shield 102, which may be of light alloy or plastics, and a commutator end shield 103 conveniently of an electrically insulating material such as nylon. Self aligning bearings 104 are provided in the frame for the armature 120. Slots 105, 106 permit a cooling air flow through the motor. A magnet 107, which may be either ceramic or of the moulded type using a plastics material loaded with a magnetically retentive material, is positioned in the shell 101. Conveniently the shell, end shields and magnet are push-fits or arranged to snap together on assembly without the need for separate fastening elements.

The armature 120 is not shown in detail and is of conventional construction of laminate stampings stacked on the shaft and coated with an insulating material where the winding is to be placed. In the described motor the frame magnet and the armature do not have a common factor in their pole-numbers. A two-pole magnet and a five-pole armature are a suitable arrangement.

The commutator 110 is mounted on shaft 120 by a bush 111 of insulating material which is force-fitted or held in place with adhensive on the shaft. The armature windings are connected to the commutator segments by "tails" (not shown) from the windings or in any other convenient manner. Bush 111 may be injection moulded from plastics and may be formed as a cooling fan by the provision of blades.

Commutator shell 103 supports two brushes 112, of carbon fibre, held in metal clamps 113 fitted into the insulating end shell 103. Electrical connections to the brushes are made via terminals 114.

Figure 2 shows a conventional three-pole straight-cut commutator with a flexible fibre brush. The drawing is schematic and represents both drum and disc type commutators. In the drawing the commutator segments indicated at SI, SII and SIII are respectively for one end of each of windings I, II, III and the other end of winding I. The brush contact area is indicated at BR and the direction of movement of the commutator by arrow R. The windings are connected to the commutator segments at terminals T. Commutator segments are insulated from one another by the insulation INS between them. This insulation may be a layer of insulating material for a drum commutator or a surface zone of a supporting sheet of insulating material for a disc-commutator. Clearly if the disc type of commutator is used the segments will taper towards the centre of the disc but the general arrangement is maintained for both disc and drum types.

In operation of the commutator and brush arrangement shown in Figure 2 the edge AB of brush BR is the last part to make contact with each segment. The position along AB which is the actual point-of-leave will vary but after a while one position will generally experience slightly more wear, which will in turn increase the sparking and wear at that position and so on, rapidly damaging the brush and ending its useful life.

If the segment shape is altered to give a fixed point-of-leave on the brush the wear is concentrated at the area of the point-of-leave, the brush hot-spot. This will eventually reduce the commutation time, that time for which the brush is in contact with both of two adjacent segments. The current density at the point-of-leave increases because a higher current has to be switched at the end of the shorter commutation time and therefore the wear is aggravated, leading to brush failure as the wear extends along the brush.

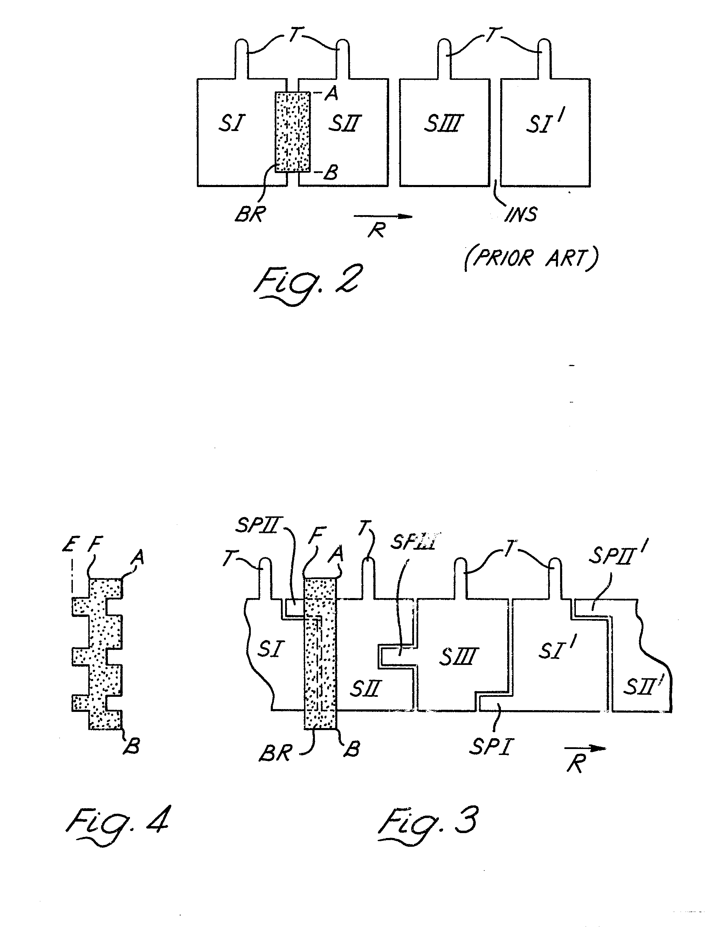

Figure 3 shows in schematic form a commutator and flexible fibre brush arrangement according to the invention. Similar references are used for this Figure and Figure 2. It will be seen that each segment has a projection SPII, SPIII, SPI', SII' from the trailing edge of one segment into the leading region of the following segment. The segments are still insulated from one another. While still using a conventional rectangular fibre brush making contact as shown at segments SI and SII designed according to the invention good commutation may be achieved over the major part of the commutation cycle, which occurs before the contact of segment SII with brush BR is restricted to the projection SPII from the segment. Relatively spark-free initial partial separation of brush and segment occurs because contact remains between the brush and the segment projection SPII for the residual current. The residual current between SPII and SPI is "broken" under conditions for low sparking. Where the winding current has already been reversed a low voltage drop is evident on SI and a high voltage drop on the restricted brush/segment contact. However wear will still occur. The projections are therefore at different positions across the commutator, for example as shown in Figure 3, so that the wear at the brush hot-spot is controllably distributed across the brush width to maintain a uniform brush length, despite wear, and to maintain good commutation conditions for the life of the brush.

Figure 4 shows how the brush in Figure 3 might wear in use. Because the brush parts in contact with the segment projections will tend to wear more than the rest of the brush, the contact area of the brush will widen at the positions of the projections as the shorter fibres make contact. This can improve commutation as the major commutation time, i.e. the time for which the brush is in contact with the whole of the segment, is increased by the widening of the brush.

In addition to this improvement the following improvements are provided by the commutator and brush arrangement shown in Figure 3.

(a) The brush hot-spot is equalised around the commutator.

(b) The production tolerance on brush dimensions can be relaxed. As the wear tends to increase brush width the brush can be thinner initially, allowing the brush to wear itself into a shape by which relatively spark-free commutation takes place.

(c) The wear will alternate between the brush part in contact with the segment projection and the trailing edge of the brush. As the trailing edge wears the major commutation time shortens increasing the wear at the segment projection as the residual current is increased and vice versa. The wear on the brush is thus self-compensating. However commutation will become progressively earlier, a change known as "brush rock". By using a two-bundle construction only the trailing bundle will wear significantly to the fan shown in Figure 4, minimising "brush rock".

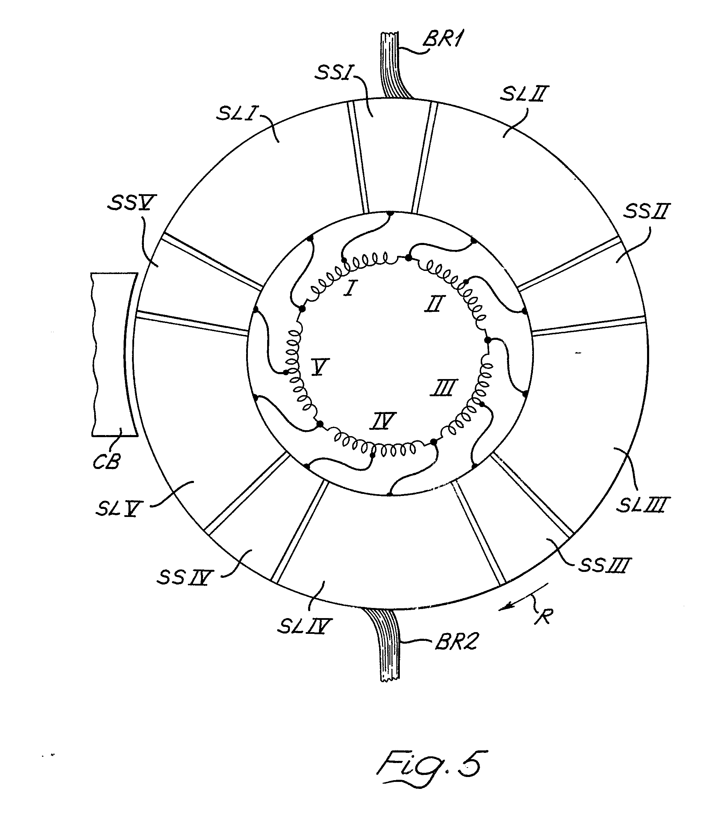

Figure 5 shows another improvement of commutator arrangements. It is well known to bring out one or more tappings from one armature winding to separate commutator segments. This practice improves commutation. For example a five-pole machine would have ten segments on the commutator and each winding to be commutated would have half the number of turns. As shown in Figure 5 the segments of the commutator embodying the invention are of different sizes. For each centre-tapped winding I to V there is a large segment, SL, and a small segment, SS. A flexible carbon fibre brush can be much thinner, along the direction of commutator movement R, than a hard carbon brush. Typically a hard brush for a conventional commutator having ten segments would be slightly less than $36^{o}$

thickness so that commutation time corresponds to an angular movement of the commutator of about $36^o$. The thinner carbon fibre brush can produce commutation in a time corresponding to $18^o$ of movement or less.

Accordingly the segments are sized so that the one connected to the winding part first to be commutated is no larger than required for the thinner brush to achieve commutation. The segment for the other part of the winding is increased and occupies the remainder of the space available for the winding around the commutator. In the five-pole example the segments will thus be $18^o$ and $54^o$ although other divisions of the available $72^o$ are possible.

In operation the rotor and commutator, which may be disc or drum type, rotates in direction R past opposed fibre brushes BR1 and BR2. Considering brush BR1 this will commutate the first half of winding I in about $18^o$ of rotation and would then, on a conventional $36^o$ segment, be inactive for $18^o$ in a "dead-zone". However with the commutator in Figure 5 the brush BR1 immediately makes contact with segment SLI to initiate commutation in the second half of winding I. When there is a "dead-zone" little useful output is contributed to the machine because the currents in the individual halves of the slot winding are in anti-phase minimising the useful flux in the associated rotor pole. The efficiency of the rotor winding is therefore improved by reducing the "dead-spot" at the end of commutation of the first half of the winding to a minimum.

For odd numbers of rotor (armature) poles there is a further advantage in that the brushes commutate sequentially rather than serially as would occur with equal segments and "full segment width" brushes. Commutation of one entire slot winding is virtually completed under, say, the negative brush before commutation under the positive brush is initiated. Thus transient currents generated under one brush within the winding do not affect the other brush while it is in the commutation mode. Also with the narrow brushes and unequal segments only one half-section of the total winding undergoes commutation at any instant whereas with equal segments and "full-width" brushes two half sections of the total winding must simultaneously be under the influence of the brushes. The arrangement in Figure 5 thus provides more balanced commutation.

Although flexible carbon fibre brushes are illustrated suitable hard brushes may be used instead.

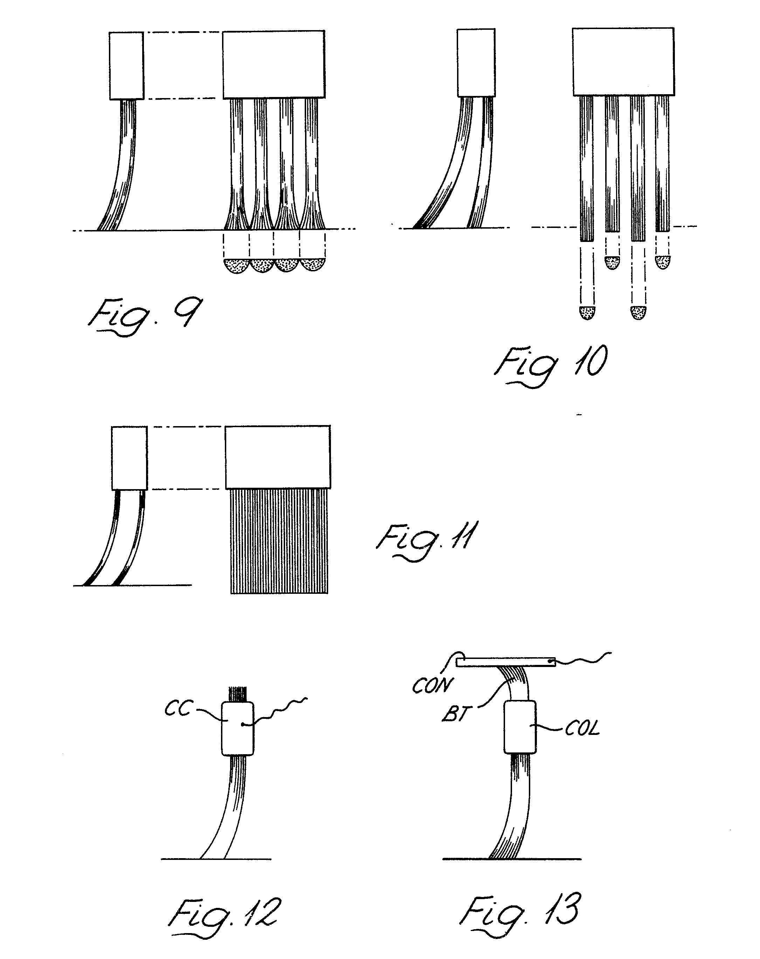

Figures 9, 10 and 11 show forms of flexible carbon fibre brushes which are suitable in place of the conventional straight bundle of fibres for the commutation arrangements described. In each case the conventional single straight bundle of carbon fibres has been changed to much smaller spaced apart bundles of fibres.

Typically for a small electric motor, energised at a few volts to draw about one ampere of current or less, a conventional brush would have tens of thousands of fibres closely packed into one bundle and held by a conductive collar or cap providing the supply terminal. As the bundle bends under pressure against the moving commutator the fibres tend to layer and only about one-third make contact at the brush/segment interface. Matting or felting of the fibres occurs and the out-of-contact fibres bear on the others and this encourages entrapment of carbon particles from the wearing fibres compacting and clogging the brush at the interface to tend to a solid mass. A brush to commutate a motor having a d.c. line current of 0.75A at 3 volts per segment would typically have 20,000 fibres in a width of 6mm, the fibres having a free length of about 7mm.

As shown in Figure 9 there is provided a brush with a reduced number of fibres grouped in spaced apart bundles. Figure 9 shows how the small bundles spread on contact with the commutator to be loosely coupled at the interface so reducing the risk of entrapping particles and compacting the brush. In one arrangement only about one-sixth of the number of fibres is used, spaced in the bundles.

Figure 10 shows that by cutting the bundles to different lengths a larger contact area can be achieved with a small number of fibres again avoiding granule pick-up and brush compaction while providing an increased contact area without increasing the number of fibres.

Figure 11 shows an alternative arrangement spaced bundles using two full-width spaced thin layers. Clearly other variations can be produced on the basis of the above arrangements.

Figures 12 and 13 show flexible brushes on commutators and alternative arrangements for making connection to such a flexible fibre brush to supply current thereto.

In Figure 12 the brush is clamped at a point near to one end by a conductive collar CC to which connection is made to supply current to the brush. Connection to individual fibres is then in part by current flow "sideways" in the bundle through the contact resistance of the fibres.

In Figure 13 the brush is clamped at a point sufficiently far from one end to leave a bendable "tail", BT. This clamp is a collar, COL, which may be of conductive or non-conductive material as it is not the electrical connection. Electrical connection is by connector CON which is pressed against the tail BT to make electrical connection to the fibres at their exposed tips. The flexibility of the fibres provides contact pressure to give a contact resistance low enough to avoid over heating. Suitable ratios of widths to thickness are between 5 and 25:1 and preferably in the range 10:1 to 20:1 or more for multi-bundle brushes.

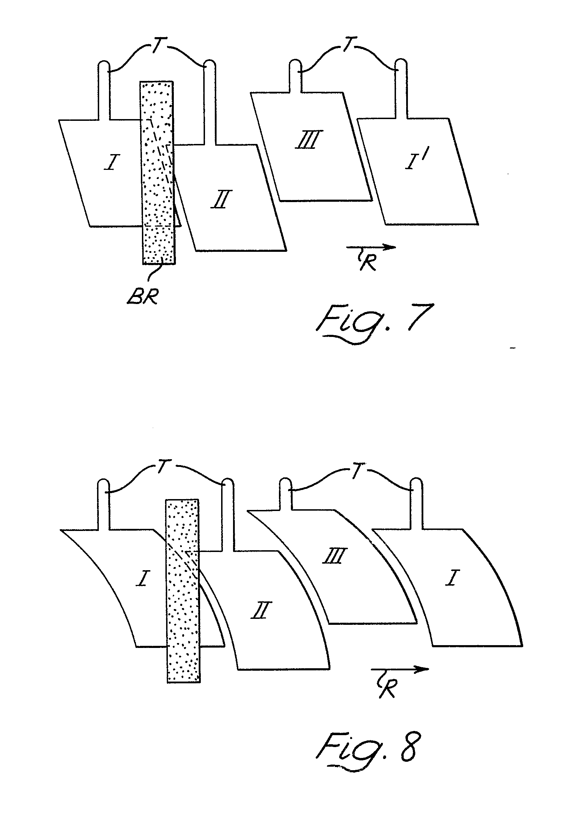

Figures 7 and 8 show arrangements, in schematic form, respectively for angled and spiral-cut commutators, which provide a degree of variation of the point-of-leave while not spreading the point-of-leave over the whole brush. Some improvement is therefore achieved in brush life but eventually failure will occur in the usual self-accelerating manner as commutation time is cut down by brush wear.

Another arrangement, not shown, provides a zig-zag junction between commutator segments so that specific points-of-leave are defined. Again some improvement is achieved particularly if the zig-zags are different and some points are cut back.

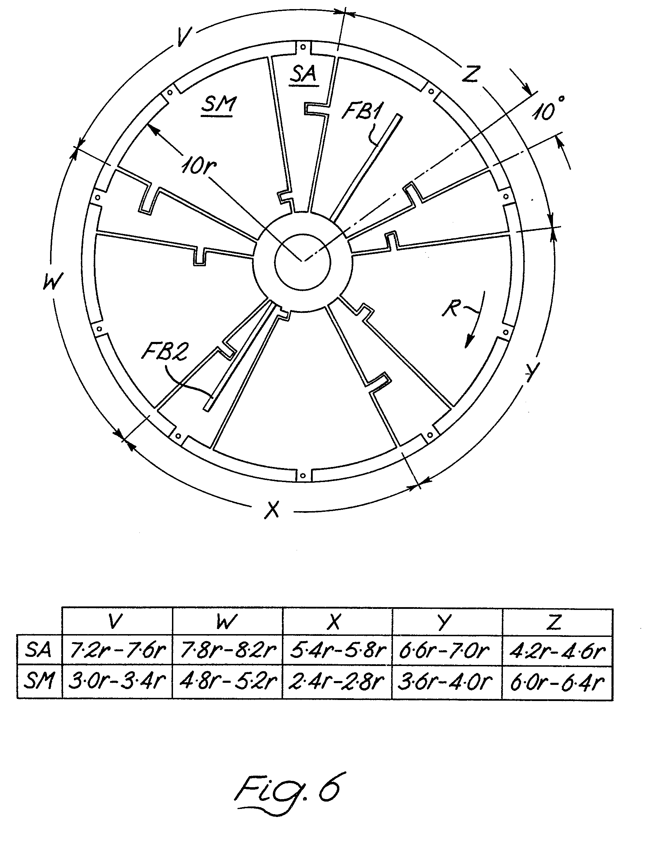

Figure 6 shows a commutator arrangement including various ones of the features described above for a specific micro-motor of the following rating:-

- 13 -

| | |
|---|---|
| Output: | 10 watts |
| Life: | 200 hours minimum |
| Speed: | 14000 rpm |
| Voltage: | 24Vdc |
| Efficiency: | 60% |
| Armature: | 5 slot |
| | 19mm diameter |
| | 13mm overall length winding |
| | as Figure 5 |
| Field: | 2-pole magnet |
| Commutator: | face plate, as figure 6 |
| Brushes: | 7mm long, 0.5mm thick, |
| | 6mm wide, MODMOR II fibres |

The magnet is conveniently of the proprietary material PLASTIFORM (RTM) and the type 1.4M in 2 segments of 150° 3mm thick and 18.5mm wide. The brush ratio here is 12:1. If the double brushes described below are used each bundle will be some 0.25mm thick, i.e. total 0.5mm, with an individual ratio of 24:1.

The commutator is of 1/32 inch, 1 ounce copper, fibre glass backed printed circuit board.

Referring to Figure 6 the positions of the projections (as indicated in Figure 3) from each segment are given in the table. The five armature windings are identified as V,W,X,Y and Z, the smaller segments (18°) as SA and the larger ones (54°) as SM. The angular sizes are approximate as some space is needed to separate the segments to insulate them from each other on the insulating substrate of the printed circuit board. Each projection extends over 10° at a different radius given in terms of the overall radius of the commutator. The overall radius, 10R in the figure, is to the outer edge of the segments and in the specific example above is approximately 1cm. Factor R therefore has a value of 1mm in this example.

The brush positions are 180° apart and are identified at FB1 and FB2.

- 14 -

The segment projections are shown for only some of the segments for clarity of the drawing.

In operation of the disc commutator the brush makes contact with both of two adjacent segments of the disc at the periphery. Thus progressive commutation takes place with the trailing edge of the brush gradually leaving the segment until only the tip of the inner end is in contact with the segment. This happens in about $7^{o}$ of rotation and completes the major part of the commutation. The brush is then only in contact with the segment through the projection from the segment and commutation is completed by interrupting the residual current under conditions appropriate to low sparking, as described for Figure 3.

The projection thus provides protection against sparking for the brush part not in contact with the projection resulting in a brush wear pattern derived from that in Figure 4.

Clearly other forms of commutator can be arranged to operate in the manner described. For example the sections can be spiral or angle cut to bring the point-of-leave, apart from the projection, to the outer edge.

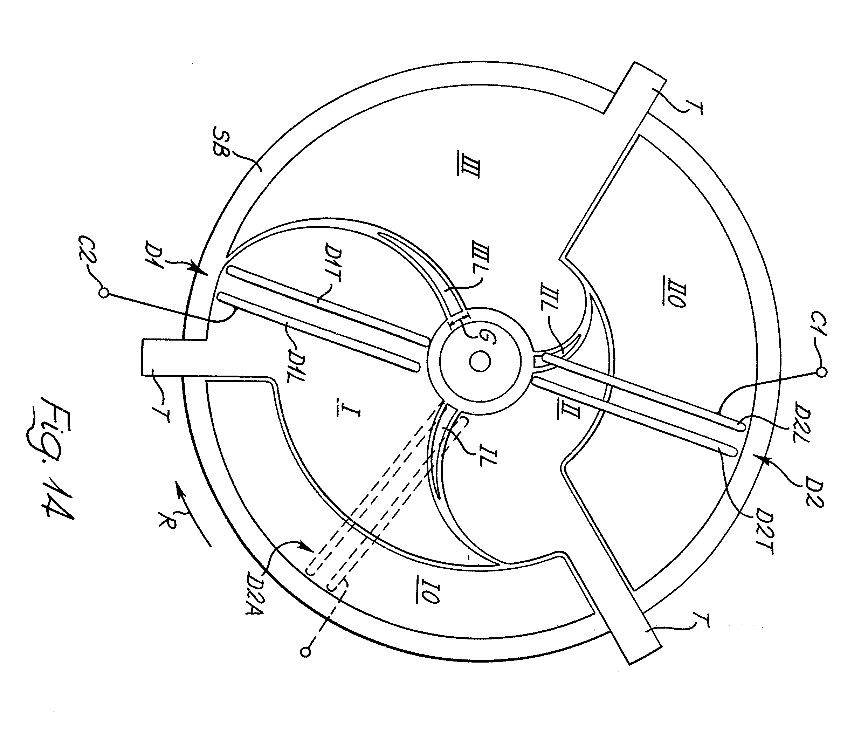

Figure 14 shows a commutator arrangement for an electrical machine according to the invention in which various features are deployed to individually and in combination enhance the performance of the commutator both in terms of the life of the commutator and maintenance of a required performance of the machine.

Specifically the commutator is a face-plate or disc type for a micro-motor of about 10 watts rating for a speed of some 10,000 rpm to operate for a total of 200 to 300 hours on an intermittent duty cycle. However, it is clear that other machine sizes and ratings, e.g. fractional horse power, d.c. and universal motors or generators, can be provided with such commutator arrangements. Such machines are widely required for automobile accessory applications, among many others.

As shown in Figure 14 the commutator is formed by printed circuit techniques with copper or other conductive areas on an insulating substrate SB which may be of glass fibre and resin board. The shape is blanked out to give tags T and a central aperture for a boss to which a rotor shaft is secured, as shown in Figure 1. By etching or other means conductive areas are defined on the surface of the substrate.

The commutator shown is for a three-pole rotor or amature winding so three main conductive areas I, II, III form commutator segments each having a tag T for the connection of winding ends. It will be seen that each area I, II, III is of a different shape; although all have the same angular dimension, some $120^o$, the radial dimensions vary. This variation, shown also in Figure 8, firstly provides different points-of-leave so that brush wear is spread over the brush width, increasing brush life, and reducing the build-up of a film of deposit on the commutator at any one point, increasing the effective life of the commutator. In addition the adjacent edges of the commutator segments are curved in different ways. Taking, for example, the adjacent edges of segments I and III, these edges are curved to generally circular arcs which leave the centre of the commutator along spaced radial lives and then turn through about $90^o$ to come closer together at the point-of-leave, which in this case is at the edge. In the other cases the point-of-leave is nearer the centre and isolated areas of copper, IO and IIO are provided to produce a generally level surface for the brushes D1, D2 to sweep over. An important feature is the tapering space between the curved segment edges, which is wide at the centre. This space also has isolated areas or lands, which may be copper or other conductive or insulating material, identified at IL, IIL, IIIL to provide a level surface. These features provide advantages over known commutator shapes. The direction of rotation of the commutator is indicated at arrow R.

The brushes, D1, D2, are of the form shown in Figure 11. Here two full width layers or bundles of carbon fibres D1T, D1L and D2T, D2L are spaced apart in the collar. In a preferred form of this brush used in the Figure 14 embodiment a supply connection C1, C2, is made only to the layer which leads, i.e. first makes contact with the next commutator segment. The trailing layer does not have any connection to it. If required three layers, or more, may be used in which case the rearmost layer is the one without a connection.

The construction of the rest of the machine can be conventional, e.g. as shown in Figure 1, so no general description is needed.

The action and operation of the commutator arrangement is now described with reference to the brush D2 shown in dotted outline at D2A as first about to commutate current from segment I to segment II. It will be seen that the other brush D1 will be wholly on segment III at this time. The action of commutation is to reduce to zero the current entering one segment and increase to the rated value the current entering the next segment. Under ideal conditions the action should be as rapid as possible and occur when the winding undergoing commutation is at a minimum flux condition. In practice due in part to armature reaction, the finite inductance of the rotor windings and their magnetic displacement the current needs to be reversed and transferred in a controlled way to minimise sparking at the point-of-leave. The ideal cycle is described in text books but is difficult to achieve with a solid brush/straight-cut commutator in micromotors where commutation is in a mainly resistive circuit.

From study of Figure 14 it will be seen that the leading layer of the brush moves into the space between the segments and sweeps over land IL to which no connection exists. The width and curvature of the inter-segment gaps G is chosen to be greater than the width of the leading layer and to be significant fraction, say at least one quarter and if possible one half of the commutator segment radial dimension at this point. The area of contact to the segment being left is thus significantly reduced, while the rest of the brush is not in contact with any rotor winding, so creating a period of reduced contact area before contact to the next segment. This is not likely to produce excessive loading, in amps per unit area, of the brush-segment connection as the time of contact is short due to the speed of rotation of the commutator, and the brush usually has an adequate margin anyway. A further reason, arising from the invention, is that the reduction in contact area increases the resistance of the brush segment connection, and thus increases the voltage-drop with commensurate fall in current, aiding the commutation of the current and reducing sparking and brush-burn with deposit of film on the commutator.

The continued rotation of the commutator will bring the leading layer into contact with the next segment to start current flow. The curvature of this segment ensures a rapid growth in contact area permitting a rapid initial growth in current without too high a current density. Connection between the two segments is now by lateral current flow in the brush or by flow up the fibres to the collar, across and down the fibres. Either way the connection is more resistive than the direct path from supply connection to segment, reducing inter-segment current. The contact area to the previous segment is also further reduced by the continued rotation approaching the point-of-leave at the tip of the previous segment.

Further rotation brings the unconnected trailing layer of the brush over the isolated land and gap G to touch both segment I and segment II, initially in parallel with the leading layer of the brush. This parallel path will reduce the resistance of the inter-segment path and increase the contact area to the previous segment but this can be helpful at this stage as the leading brush layer is nearing the point-of-leave and sparking might occur with the increasing current density on the segment as commutation nears completion. The presence of the trailing layer means that the leading layer passes the point-of-leave without having to break the connection to the segment, which is now taken up by the trailing layer. The current to the segment now follows an extended, higher resistance path from the supply connection, through the leading brush layer and into segment II, through the segment, out of the segment and into the trailing brush layer, sideways through the brush layer and into segment I. This path of increased resistance increases the voltage-drop in the path to the segment from which the current is being commutated and thereby the voltage-drop actually at the segment edge and thus reduces the risk of sparking with consequent wear on the brush and the deposit of a film of material on the commutator. This film reduces the performance of the machine, often by reducing the speed. If required the trailing brush layers D1T, D2T can be cut away at the part nearest the centre of the commutator disc to delay the making of contact with the lands and the resultant reduction from the initial rate of rise of current in the next segment. Clearly the commutator can have the gaps widest at the outside with appropriate changes in brush form.

The arrangement shown thus improves commutation and the life of the commutator by improving the initial stage of the supply of current to the next segment and also by controlling the end of current supply to the previous segment to reduce sparking. The stepwise increases in path resistance to the previous segment produce a significant improvement over previous techniques of attempting to increase path resistance, e.g. by including external resistors, which have inevitably affected the supply of current at all times. The trailing brush layer has no effect on current supply except in the crucial point-of-leave phase. The leading layer of the brush can easily supply the operating current without overload, especially as it is protected from sparking wear by the trailing brush. As shown in Figure 14 the feature of a variable point-of-leave is used to further reduce this wear.

The use of fibre brushes with the curved segments shown in Figures 8 and 14 gives a good approximation to the commutation requirements of a fast rate of change of voltage between segments, to reverse the winding currents followed by a more gradual decay of the trailing segment current to a minimum at a point-of-leave. Furthermore the time-scales for these two events can be separated in that current build-up in a new segment is not directly related to current decay in a previous one. The use of a wide gap between segments, which is initially along the radial line of the leading brush layer avoids this brush layer making a connection across both segments and reduces circulating currents and also reduces the build-up of film on the inner part of the commutator where the actual speed of the brush over the commutator is lowest. These problems arise from the relatively low resistance across the width of a brush which with a conventional commutator leads to heavy film build-up on the inner part and an increased contact resistance at the negative brush in particular, which leads to substantial loss of motor speed.

The gap G can be increased to a distance just greater than the space between brush layers provided that any consequent reduction in contact area is tolerable. This ensures that any current circulating between the segments has to follow an extended, and more resistive, path compared with that in a single brush of conventional from in a single layer thicker than either layer of the proposed brush.

A further improvement may be achieved as follows. Consider the commutators of Figures 7 or 8, which have the feature of varying point-of-leave. If alternate segments are not connected, assuming that sufficient segments remain for the winding used, it is possible to arrange the double layer brush so that the leading layer has completely left the previous segment before any connection is made to the next segment. Figure 15 shows such an arrangement. For simplicity this is shown without variable point-of-leave. In practice variable point-of-leave can be used if required or omitted if the commutator life obtained is still sufficient.

Using similar nomenclature as before segment I is the segment being left by double brush DBL, DBT. Layer DBL has a supply connection and in the position shown is not directly connected to either segment, but is about to touch segment II to start the supply of current to a winding connected at tag T of segment II. The land IL is electrically isolated but here is required to be conductive. Until the position shown in Figure 15 is reached the only path into segment I once commutation starts is by flow through land IL into the part of trailing layer DBT in contact with the land. This places a significant resistance into the current path from supply connection C to segment I throughout commutation.

This path includes the resistance of two brush layers, the contact resistance to the land IO at two points and any resistance in the land. Such resistance may be made high if required as it only enters into the current path to a segment being left.

Similarly at the end of contact with segment I brush layer DBT breaks contact without making contact with segment II and encouraging circulating current.

In this way commutation is under "high resistance" conditions throughout, but does not introduce the resistance into the path to the next segment. Circulating currents of high values are thus avoided. This is distinct from commutator arrangements in which a brush bridges two segments for a significant part of the time and is subjected to high circulating currents, and all their problems, as a result.

The arrangement of Figure 15 concentrates some of the voltage drop at one part of the gap, that where the brush is in contact with segment I. Figure 16 shows an arrangement to reduce this problem by providing several, in this case six, parallel points of contact. The points can be shaped to provide variable point-of-leave if required.

In those arrangements in which the leading brush cannot touch both segments at once a resistor, or resistors may be connected between the leading and trailing brush layers. Such a resistor improves the "coupling" between the leading and trailing brush layers as the leading layer leaves the previous segment.

The arrangement described above also permits the use of a diode DR connected between the brush layers to permit a controlled flow of current. The diode is polarised to allow supply current to flow, e.g. as shown in Figure 15, and is of sufficient current rating to pass circulating current, which initially is in this sense. Thus interbrush, and intersegment, currents flow during the initial high voltage rate of change and current reversal part of commutation. However, once current flow in the winding is reversed, the diode withstands and blocks the intersegment voltage and no circulating current flows as the trailing brush finally leaves the segment.

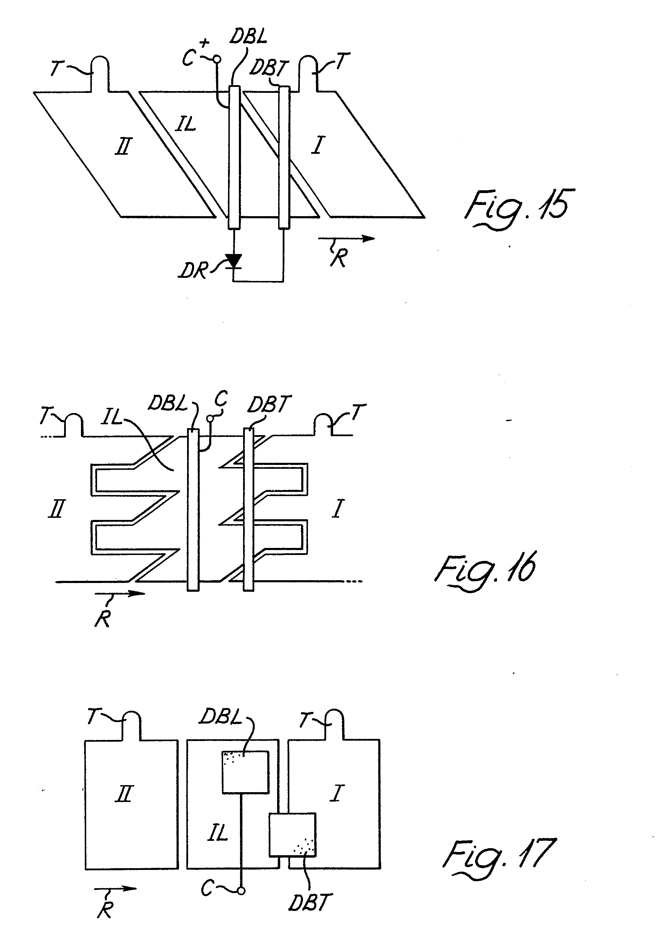

Figure 17 shows the application of a two layer brush of solid type to a straight-cut commutator. The brush layers are staggered across the commutator and sized to be just less in width than a segment. Intermediate segments are left unconnected as before. Highly conductive brushes, even with high copper loading, may be used as neither brush bridges two connected segments. The techniques described above may be applied.

The arrangements described above show various techniques which relate to the improvement of commutation conditions at the point-of-leave. These techniques have been shown separately, and in combination, to explain more fully their operation but only by way of example. Those skilled in the art will appreciate, now that the techniques have been disclosed and described, the manner of application for a particular electrical machine, whether motor or generator. Clearly drum commutators may be used if preferred and larger machines than the 10W examples given here without departing from the techniques. The exact shape of the commutators can be altered although it is observed that to be effective the gaps G should be wider than the brush, or brush layer, at least in part of the gap.

The form of the multi-layer brush can be chosen to suit the particular application but a convenient construction, for small machines at least, is to hold the layers in a collar with the layers spaced apart by an insulating spacer, of thickness similar to a layer, and complete the insulation of the trailing layer with an insulating surface, or wrapping, in the collar. The collar may be made of aluminium, anodised to provide an insulating surface, formed e.g. by casting or extrusion, with slots to accept the separate brush layers. The collar may be crimped to close it and retain the layers. Separate connections to individual layers can be made as shown in Figure 13. Where no connection is required a layer need not extend beyond the collar and portion BT is not required.

A further point affecting brush life is that for equal brushes the voltage drop on the negative brush may be up to three times that

- 22 -

on the positive brush. This can be compensated for by using fibres of different grades in the two brushes, making the free length greater for one brush or reducing the number of fibres in one brush. It is also possible to reduce the width of one brush so that it runs over a narrower track on the commutator, which may itself be modified to achieve this.

A typical commercially available electric motor built using conventional techniques has a hard carbon block brush system which requires a separate back-up spring system to maintain electrical contact with the moving commutator plus a brush guide arrangement to ensure the contact end of the brush is positioned precisely on the commutator so as to permit a degree of axial movement of the brush under running conditions while allowing the brush to move inwards under the action of the back-up spring as the brush wears. Such a system will be prone to "brush-bounce" at higher speeds and because the contact between brush and commutator is confined to the high spots of the brush only (approximately 5% of the total brush contact area) progressive commutation between segments (i.e. a gradual decrease of voltage drop at the incoming and increase at the outgoing segments) is virtually non-existent. Consequently there will be sparking under running conditions and, for small motors used in the domestic appliance industry in particular, it becomes necessary to fit additional suppression components to avoid interference with radio and television.

The above techniques provide the following improvements:-

(a) the brush has an inherent spring action dispensing with the need for brush guides and springs.

(b) the brush, which makes individual contact with the commutator over a large proportion of the brush surface area, provides LESS contact bounce and permits higher speeds of operation.

(c) the commutator design provides a much higher degree of progressive commutation giving a reduction in sparking and thus permitting a reduction in the number of interference suppression components required to be fitted.

(d)   the brush is subjected to mechanical wear and the commutator to electrical erosion of the segments of a sufficiently low level to allow the use of cheap printed circuit board in the construction of the commutator.

The above techniques thus provide improved electrical machines by improving commutator arrangements.

CLAIMS

1. An electrical machine brush commutator arrangement including a commutator having a plurality of segments together with associated brushes, the commutator segments being extended to have individual "points-of-leave" in different positions and the brushes being arranged to cooperate with the commutator to control the "point of leave" between a brush and commutator segments to not be restricted to one point on the brush during the operating life of the machine.

2. An arrangement according to Claim 1 in which the commutator has one or more segments with a transverse edge formed to define a point-of-leave in the width of a brush traversing the segment in operation, the edge form being such that in traversing the commutator point-of-leave occurs at more than one position in the width of a said traversing brush.

3. An arrangement according to Claim 1 in which the brushes are of conductive fibre and flexible.

4. An arrangement according to Claim 1 in which a segment edge is extended locally along the direction of movement of the commutator to define a point-of-leave.

5. An arrangement according to Claim 1 in which one commutator segment defines several "points-of-leave" on a brush.

6. An arrangement according to Claim 1 in which several commutator segments each define at least one point-of-leave which differs in its position on a brush from segment to segment.

7. An arrangement according to Claim 6 in which several "points-of-leave" are defined by a segment edge and each segment of the commutator has a similar plurality of edge extensions whereby each segment has the same shape.

8. A commutator arrangement according to Claim 1 including a disc commutator of an insulating substrate carrying segments formed by deposited conductive material.

9. A commutator arrangement according to Claim 8 in which the commutator is constructed by "printed circuit" techniques.

10. An electrical machine commutator arrangement according to Claim 1 including a commutator having a plurality of segments together with associated narrow brushes the commutator segments having adjacent edges curved to different degrees to provide a tapering space between the curved segment edges.

11. An arrangement according to Claim 10 in which the tapering space includes an electrically isolated land to provide a surface in the tapering space substantially level with an adjacent segment surface.

12. An arrangement according to Claim 11 in which the commutator is of printed circuit construction and the land is an isolated region of printed circuit conductor material.

13. An arrangement according to Claim 10 in which the tapering space is in part wider than a brush to cause a brush, in operation, to be in contact only with a part of one segment, that which is being left behind, before making any contact with the next segment.

14. An arrangement according to Claim 10 in which disc commutator segments have borders shaped to produce one of a straight cut, angled cut and a curved cut commutator               -

15. An arrangement according to Claim 10 in which the segments are displaced bodily with respect to each other.

16. An arrangement according to Claim 10 in which the segments are a portion only of a disc surface in an annulus at or near to the inside or outside edge of the disc.

17. An arrangement according to Claim 8 in which connection areas for the windings are joined to the segments by narrow tracks of deposited conductive material.

18. An arrangement according to Claim 1 including a commutator arrangement of narrow brushes and a commutator having a plurality of segments, together with a rotor having a multipole core wound with tapped pole windings, the commutator having segments connected to the rotor windings and to said tappings, the said segments being of different size.

19. An arrangement according to Claim 1 including a narrow brush having an aspect ratio of between 5:1 and 25:1 and preferably between 10:1 and 20:1 for a single bundle or the totality of several bundles if formed in that way.

20. An arrangement according to Claim 18 in which the segment connected to a winding tapping for one rotor pole is smaller than the segments connected to the start and finish of the winding.

21. An arrangement according to Claim 20 having a centre-tapped winding commutation with the smaller segment no more than three-quarters the size of the larger segment, i.e. that for the leading part of the winding.

22. An arrangement according to Claim 3 in which the fibres in a brush are clamped at or close to an end in a clamp of conductive material providing an electrical connection to the brush.

23. An arrangement according to Claim 3 in which the fibres in a brush are clamped at a point other than at or close to an end in a clamp of conductive or non-conductive material with one end of the brush extending to form in operation a contact with a commutator and fibres at the other end of the brush extending to provide in operation an electrical connection to brush by pressure contact with a conductive body.

24. An arrangement according to Claim 23 in which fibres at the said other end are bent over in providing the pressure contact.

25. An arrangement according to Claim 3 in which the conductive flexible fibre brushes are formed by spaced apart bundles of fibres.

26. An arrangement according to Claim 25 in which the bundles are of different lengths.

27. An arrangement according to Claim 25 in which the bundles may be spaced apart over the body of the brush.

28. An arrangement according to Claim 1 having a plurality of segments together with associated brushes in which the brushes are conductive flexible fibre brushes having spaced apart bundles of fibres, the bundles being spaced apart in the direction of relative motion, in operation, of the brush and commutator and having an electrical supply connection to the leading bundle at least but no connection to the trailing bundle of fibres.

29. An arrangement according to Claim 28 in which the arrangement and spacing of the brush bundles and the segments is such that, in operation, the leading bundle is wholly in contact with one segment before the trailing, unconnected bundle loses contact with the previous segment whereby a conductive path between these segments through the trailing brush bundle is provided for lateral current flow, through which path commutation from the previous segment occurs.

30. An arrangement according to Claim 28 in which the commutator includes isolated lands of conductive material in spaces between segments and the arrangement and spacing of the bundles and segments is such that, in operation, the leading bundle wholly leaves one segment and an adjoining land before the trailing, unconnected bundle provides a conductive path between segments also including the leading and trailing brush bundles in series and commutation takes place through a higher resistance than does current supply through the leading brush bundle.

31. An arrangement according to Claim 28 in which the commutator includes isolated lands of conductive material between segments so that the leading brush bundle, in operation, wholly leaves one segment before the trailing unconnected bundle loses contact with the one segment whereby the land provides part of a conductive path, also including the leading and trailing brushes in series, through which commutation occurs.

32. A micro motor including a commutator arrangement according to Claim 1 or Claim 10 or Claim 25.

NF705/0123D

Fig. 1

**Fig. 2** (PRIOR ART)

**Fig. 4**

**Fig. 3**

Fig. 5

0073587

| | V | W | X | Y | Z |
|---|---|---|---|---|---|
| SA | 7·2r – 7·6r | 7·8r – 8·2r | 5·4r – 5·8r | 6·6r – 7·0r | 4·2r – 4·6r |
| SM | 3·0r – 3·4r | 4·8r – 5·2r | 2·4r – 2·8r | 3·6r – 4·0r | 6·0r – 6·4r |

Fig. 6

Fig. 7

Fig. 8

6/8

0073587

Fig. 9

Fig 10

Fig. 11

Fig. 12

Fig. 13

Fig. 14

Fig. 15

Fig. 16

Fig. 17

8/8

0073587

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | H 01 R 39/04 |
| A | US-A-4 167 685 (J.BATES) | 1,3,8, 9,12, 22,28- 31 | H 01 R 39/06 |
| | *The whole document* & GB - A - 1 478 883 (Cat. D) | | |
| | --- | | |
| A | FR-A-2 258 019 (NATIONAL RESEARCH DEVELOPMENT CORP.) *The whole document* | 1,8,9, 12 | |
| | --- | | |
| A | GB-A-1 111 527 (PHILIPS ELECTRONICS) *The whole document* | 1,8-12 ,16 | |
| | --- | | |
| D,P A | WO-A-8 103 584 (UNIVERSITY OF VIRGINIA ALUMNI PATENTS FOUNDATION) *Page 6, lines 2-6; page 28, lines 10-35; page 29, lines 1-20; page 39, lines 25-35; page 40, lines 1-7; page 41; page 42* & EP - A - 81 901 860 | 3,22- 25,27 | TECHNICAL FIELDS SEARCHED (Int. Cl. ³) H 01 R 39/00 |
| | ----- | | |

The present search report has been drawn up for all claims

| Place of search THE HAGUE | Date of completion of the search 09-11-1982 | Examiner MOBOUCK G.C. |
|---|---|---|